# EUROPÄISCHE PATENTSCHRIFT

(11) **EP 3 762 640 B1**
(45) Veröffentlichungstag und Bekanntmachung des Hinweises auf die Patenterteilung: **06.04.2022**
(21) Anmeldenummer: 19706877.8
(22) Anmeldetag: 11.02.2019
(51) Int. Cl.: F16K 24/00, F16K 31/18, F16L 55/07, F01M 13/00

(54) **ENTLÜFTUNGSVENTIL UND HYBRIDMODUL**
VENTING VALVE AND HYBRID MODULE
SOUPAPE DE PURGE D'AIR ET MODULE HYBRIDE

(30) Priorität: 07.03.2018 DE 102018105244
(43) Veröffentlichungstag der Anmeldung: 13.01.2021
(73) Patentinhaber: Schaeffler Technologies AG & Co. KG, 91074 Herzogenaurach (DE)
(72) Erfinder: WEMLINGER, Sebastian, 77704 Oberkirch (DE); GLOMB, Simon, 76532 Baden-Baden (DE)
(86) Internationale Anmeldenummer: PCT/DE2019/100128
(87) Internationale Veröffentlichungsnummer: WO 2019/170188

(56) Entgegenhaltungen:
- WO-A1-2015/125034
- US-A- 3 620 240
- US-A1- 2017 204 988

## Beschreibung

Die Erfindung betrifft ein Entlüftungsventil für die Entlüftung eines Antriebsaggregats eines Kraftfahrzeugs, insbesondere eines Hybridmoduls, sowie das mit dem Entlüftungsventil ausgestattete Hybridmodul.

Aus dem Stand der Technik sind Antriebskonzepte bekannt, die Gehäuse aufweisen, in denen Gase entstehen. Es besteht die Anforderung, die Gase spätestens bei Überschreitung eines zulässigen Drucks aus dem Gehäuse herauszulassen. Dies tritt insbesondere auch bei sogenannten Hybridmodulen auf, welche elektrische Antriebe mit der Antriebsleistung aus Verbrennungskraftmaschinen vereinen.

Im Gehäuse eines derartigen Hybridmoduls ist üblicherweise eine elektrische Maschine angeordnet, deren Betrieb Wärme entwickelt, die dazu führt, dass der Druck von im Gehäuse des Hybridmoduls befindlichem Gas steigt. Dies kann noch verstärkt werden durch die Erhitzung von Betätigungsmedien, wie zum Beispiel Druckölen, und/oder Kühlmitteln. Des Weiteren entsteht durch die Betätigung von Kupplungseinrichtungen im Hybridmodul üblicherweise Abrieb in Form von kleinen Partikeln, die ebenfalls aus dem Gehäuse entfernt werden sollen.

Zurzeit bekannte Entlüfter ermöglichen es, im Gehäuse diffundiertes Wasser entweichen zu lassen und einen Druckausgleich herzustellen.

Zu diesem Zweck müssen Gehäuse üblicherweise Öffnungen zur Abfuhr des Gases bzw. der Partikel aufweisen. Nachteilig an diesen Öffnungen ist jedoch, dass dadurch die Gefahr des Eintritts weiterer Medien, wie zum Beispiel Spritzwasser, durch eine jeweilige Öffnung besteht. Erst recht ist keine vollständige Dichtheit zu verzeichnen, wenn das Gehäuse in ein flüssiges Medium eintaucht, wie es im Fall einer Anwendung an einem Hybridmodul an einer relativ tiefen Position eines Kraftfahrzeugs nicht ausgeschlossen werden kann.

Einrichtungen, die diesen nachteiligen Effekt verhindern sollen, sind zum Beispiel Druckausgleichselemente. Diese haben jedoch den Nachteil, dass sie üblicherweise in nicht ausreichender Menge Wasserdampf entweichen lassen und zudem die Gefahr besteht, dass durch Kupplungs-Abrieb und/oder durch von außen angetragene Verschmutzung eine Zusetzung des Druckausgleichselements erfolgt.

Aus der CN106286906 A ist ein Durchflussventil bekannt, welches dazu ausgestaltet ist, in einem Gehäuse aufgenommenes Wasser an einer tiefen Position des Gehäuses abzuführen. Ein Begrenzungsmechanismus sorgt dafür, dass Wasser abgeführt werden kann, ohne dass unerwünschte Medien durch das Ventil eindringen können.

Die CN 107132775 A lehrt ein intelligentes Dränage-Ventil, welches ebenfalls an einer tiefen Position eines Gehäuses angeordnet ist, um darin befindliches Wasser abzuführen. Ein mit einer Feder betätigter Sicherheitsmechanismus dient zur automatischen Schließung einer Öffnung im Gehäuse, an der das Dränage-Ventil angeschlossen ist.

Weitere Rückschlagventile sind aus der US 2017/204988 A1, US 3 620 240 A und WO 2015/125034 A1 bekannt. Hier werden entsprechende Kugeln zum Verschließen von Zuleitungen zu Reservoirs vorgeschlagen.

Hiervon ausgehend liegt der vorliegenden Erfindung die Aufgabe zugrunde, ein Entlüftungsventil sowie ein damit ausgestaltetes Hybridmodul zur Verfügung zu stellen, die in kostengünstiger sowie langlebiger Ausgestaltung die zuverlässige Abfuhr von Gas aus dem Gehäuse des Hybridmoduls ermöglichen.

Diese Aufgabe wird durch das erfindungsgemäße Entlüftungsventil nach Anspruch 1 sowie durch das damit ausgestattete Hybridmodul nach Anspruch 8 gelöst. Vorteilhafte Ausgestaltungen des Entlüftungsventils sind in den Unteransprüchen 2 bis 7 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft ein Entlüftungsventil für die Entlüftung eines Antriebsaggregats eines Kraftfahrzeugs, insbesondere eines Hybridmoduls, welches eine erste Kammer zur Ausbildung eines ersten Strömungspfads entlang einer ersten Strömungsrichtung umfasst, wobei die erste Kammer eine Anordnungsseite zur mechanischen Fixierung an einem Gehäuse des Antriebsaggregats aufweist und auf der der Anordnungsseite gegenüberliegenden Seite eine schräge Begrenzungswand aufweist. Die von der schrägen Begrenzungswand ausgebildete Ebene verläuft spitzwinklig zur ersten Strömungsrichtung und kragt seitlich über die erste Kammer hinaus, so dass bei senkrechter Ausrichtung des Entlüftungsventils durch die erste Kammer aufsteigendes Gas von der schrägen Begrenzungswand um lenkbar ist und an der schrägen Begrenzungswand anhaftendes Kondensat an der schrägen Begrenzungswand ablaufen kann und neben der ersten Kammer abtropfen kann.

Die seitliche Auskragung der schrägen Begrenzungswand über die erste Kammer hinaus ist derart ausgebildet, dass sich die senkrechte Projektion der schrägen Begrenzungswand über die Projektionsfläche der ersten Kammer in Bezug zur Längsachse der ersten Kammer seitlich hinaus erstreckt, wobei die Auskragung der schrägen Begrenzungswand über die erste Kammer hinaus in dem Bereich erfolgt, der der Anordnungsseite näher liegt als die gegenüberliegende Seite. An der Seite der Überdeckung mit der schrägen Begrenzungswand ist die erste Kammer seitlich geöffnet, um einen Gasabzug aus der ersten Kammer unter der schrägen Begrenzungswand zu gewährleisten.

Vorzugsweise ist neben der ersten Kammer eine zweite Kammer angeordnet, die von der schrägen Begrenzungswand einseitig abgeschlossen ist und an der der schrägen Begrenzungswand gegenüberliegenden Seite eine Öffnung aufweist. Dabei können die beiden Kammern eine gemeinsame Trennwand aufweisen, die den Raum der ersten Kammer von dem Raum der zweiten Kammer trennt.

Zwecks Blockade eines von der zweiten Kammer ausgebildeten zweiten Strömungspfades bei Eintritt einer Flüssigkeit in die zweite Kammer in Richtung auf die erste Kammer weist das Entlüftungsventil vorteilhafterweise in der zweiten Kammer ein Rückschlagventil auf.

Das Rückschlagventil kann einen Schwimmkörper sowie ein Dichtelement aufweisen, die derart angeordnet sind, dass bei in die zweite Kammer eintretender Flüssigkeit der Schwimmkörper auftriebsbedingt gegen das Dichtelement im Wesentlichen Flüssigkeits-dichtend angelegt oder angedrückt wird. Die Funktion des derart aufgebauten Rückschlagventils setzt dafür voraus, dass die zweite Kammer im Wesentlichen derart senkrecht angeordnet ist, dass die Öffnung der zweiten Kammer und der Schwimmkörper unterhalb des Dichtelements angeordnet sind.

In weiterer vorteilhafter Ausgestaltung ist vorgesehen, dass das Rückschlagventil weiterhin eine Wegbegrenzung aufweist, die die Positionierung des Schwimmkörpers in einem Abstand zur Öffnung der zweiten Kammer gewährleistet. Derart wird durch die Wegbegrenzung erreicht, dass der Schwimmkörper nicht aus der Öffnung der zweiten Kammer heraustreten oder fallen kann.

Zur Minderung eintretenden Spritzwassers ist das Entlüftungsventil erfindungsgemäß derart ausgestaltet, dass die zweite Kammer die Öffnung zumindest teilweise umgebend einen Spritzwasserschutz aufweist, mit dem ein Strömungswiderstand für einströmende Flüssigkeit erhöht ist oder eine Barriere gegen Spritzflüssigkeit gebildet ist. Hierbei verläuft vom Rand der Öffnung der zweiten Kammer ausgehend dieser Spritzwasserschutz in Bezug auf eine Längsachse der zweiten Kammer radial nach innen, sodass dadurch der Querschnitt der Öffnung der zweiten Kammer eingeschränkt wird. Dadurch kann effizient die Menge durch die Öffnung eintretenden Spritzwassers verringert werden bzw. ein Strömungswiderstand gegen einströmende Medien vergrößert werden.

Die erste und die zweite Kammer können derart relativ zueinander angeordnet sein, dass ein durch die beiden Kammern ausgebildeter, gemeinsamer Strömungspfad in seiner Erstreckung im Wesentlichen um 180° umgelenkt ist. Das bedeutet, dass aus einem Gehäuse, wie zum Beispiel einem Gehäuse eines Hybridmoduls, an dem das erfindungsgemäße Entlüftungsventil angeschlossen ist, Gas austreten und in die erste Kammer eintreten kann und sodann nach einer Umlenkung an der schrägen Begrenzungswand im Wesentlichen in einem Winkel von 180° durch die zweite Kammer in entgegengesetzter Richtung weitergeleitet werden kann, wo das Gas aus der Öffnung der zweiten Kammer austreten kann.

In die zweite Kammer eintretende Flüssigkeit wird jedoch in einer Strömung entlang dieses gemeinsamen Strömungspfades durch das Rückschlagventil aufgehalten.

Die Querschnitte der beiden Kammern in einer Ebene senkrecht zur jeweiligen Längsachse bzw. zum durch die jeweilige Kammer realisierten Strömungspfad sind im Wesentlichen gleich groß.

Zur einfachen Montage des Entlüftungsventils kann vorgesehen sein, dass an der ersten Kammer an der der schrägen Begrenzungswand gegenüberliegenden Seite wenigstens ein Formelement ausgebildet ist, das dazu geeignet ist, mit einem hinsichtlich der Form und Größe komplementär ausgebildeten Gegen-Element eine Rasteinrichtung auszubilden. Dadurch kann ein so genannter Schnappverschluss zwischen dem Entlüftungsventil und einem Gehäuse, an welchem das Entlüftungsventil anzuordnen ist, ausgebildet werden, sodass das erfindungsgemäße Entlüftungsventil in montagetechnisch einfacher Weise und mit geringstem Zeitaufwand formschlüssig an dem Gehäuse montiert ist.

Bevorzugt sollte der Winkel der schrägen Begrenzungswand in Bezug zur Ausrichtung des ersten Strömungspfades der ersten Kammer zwischen 20° und 85° betragen. Insbesondere beträgt der Winkel zwischen 60° und 80°. Damit ist ein ausreichendes Gefälle gegeben, um an der schrägen Begrenzungswand abgesetztes Kondensat Schwerkraft-bedingt an der schrägen Begrenzungswand ablaufen und spätestens bei Kontaktierung an einer Begrenzungswand der zweiten Kammer dort abtropfen oder an dieser Wand ablaufen zu lassen.

Ein weiterer Aspekt der vorliegenden Erfindung ist ein Hybridmodul für ein Kraftfahrzeug zum Ankoppeln einer Verbrennungskraftmaschine, umfassend eine elektrische Antriebseinheit sowie wenigstens eine Kupplungseinrichtung, die mit einem Rotor der elektrischen Antriebseinheit drehfest verbunden ist und mit der das Hybridmodul an einer ersten Seite, insbesondere einer Eingangsseite, mit einer Verbrennungskraftmaschine koppelbar ist, und an einer zweiten Seite, insbesondere einer Ausgangsseite, mit einem Getriebe koppelbar ist, wobei das Hybridmodul weiterhin ein Entlüftungsventil gemäß einem der Ansprüche 1-9 aufweist, welches strömungstechnisch mit einer Gehäuseöffnung des Hybridmoduls verbunden ist, sodass Gas aus dem Hybridmodul über das Entlüftungsventil entweichen kann. Damit wird zusätzlich die Möglichkeit geschaffen, dass auch Abrieb-Partikel von Kupplungseinrichtungen des Hybridmoduls aus dem Hybridmodul bzw. aus dessen Gehäuse mit einem Gasstrom abgeführt werden können.

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt ist.

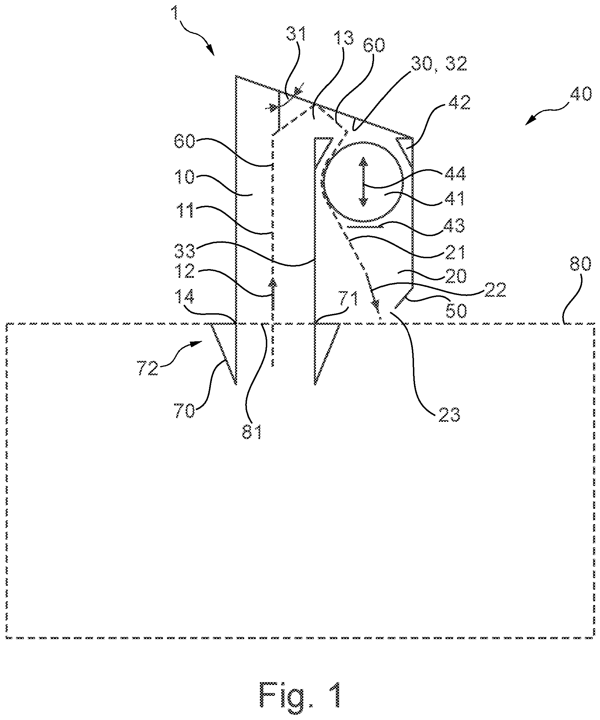

Die ein Ausführungsbeispiel der Erfindung darstellende Figur 1 zeigt ein Entlüftungsventil an einem Gehäuse in Schnittansicht.

Es ist hier das Entlüftungsventil 1 erkennbar, welches eine erste Kammer 10 aufweist, die entlang einer ersten Strömungsrichtung 12 einen ersten Strömungspfad 11 ausbildet, der im Wesentlichen senkrecht zu einer Oberfläche eines an dem Entlüftungsventil 1 angeschlossenen Gehäuses 80 verläuft. Die erste Kammer 10 weist an einer dem Gehäuse 80 zugewandten Anordnungsseite 14 ein Formelement 70 in Form von wenigstens einer Rast-Klinke auf, die in einer Gehäuseöffnung 81 im Gehäuse 80 eingerastet ist. Das die Gehäuseöffnung 81 ausbildende Material des Gehäuses 80 bildet somit auch ein Gegen-Element 71 aus, welches zusammen mit dem Formelement 70 an der ersten Kammer eine Rasteinrichtung 72 zur formschlüssigen Fixierung des Entlüftungsventils 1 am Gehäuse 80 realisiert.

Auf der der Rasteinrichtung 72 entlang des ersten Strömungspfades 11 gegenüberliegenden Seite weist die erste Kammer 10 eine seitliche Öffnung 13 auf, die von einer schrägen Begrenzungswand 30 überdacht ist. Die schräge Begrenzungswand 30 weist dabei eine Auskragung 32 aus, die seitlich über die erste Kammer hinausragt.

Im Gehäuse 80 vorhandener Wasserdampf kann somit durch die Gehäuseöffnung 81 und die erste Kammer 10 entlang des ersten Strömungspfades 11 aus dem Gehäuse 80 austreten und gelangt derart an die Unterseite der schrägen Begrenzungswand 30. Dort kann der Wasser-Anteil kondensieren. Entstehende Kondensat-Tropfen können aufgrund der schrägen Anordnung der Begrenzungswand 30 schwerkraftbedingt an der schrägen Begrenzungswand 30 ablaufen und gelangen somit neben die erste Kammer 10. Dort kann das Kondensat abtropfen oder aber an einer Innenwand der neben der ersten Kammer 10 angeordneten zweiten Kammer 20 ablaufen.

Die zweite Kammer 20 ist von der ersten Kammer 10 in der hier dargestellten Ausführungsform lediglich durch eine gemeinsame Trennwand 33 getrennt. Die zweite Kammer 20 bildet entlang einer zweiten Strömungsrichtung 22 einen zweiten Strömungspfad 21 aus, nämlich im Wesentlichen von der schrägen Begrenzungswand 30 zu einer dieser entlang des zweiten Strömungspfades gegenüberliegenden Öffnung 23. Im Gehäuse 80 vorhandene Gase können somit entlang eines gemeinsamen Strömungspfades 60, der sich aus dem ersten Strömungspfad 11 und dem zweiten Strömungspfad 21 zusammensetzt, durch die Öffnung 23 aus dem Gehäuse 80 austreten.

Ersichtlich ist, dass die zweite Kammer in der hier dargestellten Ausrichtung des Entlüftungsventils an der Unterseite der zweiten Kammer durch die Ausbildung der Öffnung 23 geöffnet ist. Entsprechend ist verhindert, dass von oben auf das Entlüftungsventil auftreffendes Spritzwasser in die beiden Kammern 10,20 eintreten kann.

Um jedoch auch das Eintreten von seitlich spritzenden Medien zu verhindern bzw. zu erschweren ist im Bereich der Öffnung 23 an der zweiten Kammer ein Spritzwasserschutz 50 in Form eines nach radial innen der zweiten Kammer 20 verlaufender Absatz gebildet. Dieser schränkt den Querschnitt der Öffnung 23 und damit die Eintrittsmöglichkeit von Medien ein.

Um zusätzlich einen Tauch-Schutz zu realisieren umfasst das Entlüftungsventil 1 weiterhin ein Rückschlagventil 40. Dieses Rückschlagventil 40 weist einen Schwimmkörper 41, hier in Form eines Balls, auf, sowie ein Dichtelement 42. Bei Anstieg eines Flüssigkeit-Niveaus in der zweiten Kammer 20 führt dies zu einer Auftriebs-bedingten Verschiebung bzw. Bewegung 44 des Schwimmkörpers 41, sodass dieser an dem Dichtelement 42, welches vorzugsweise eine Kreisringform aufweist, zur Anlage kommt. Dadurch wird der zweite Strömungspfad in der zweiten Kammer 20 unterbrochen, sodass keine Flüssigkeit mehr von außen durch die zweite Kammer 20 in die erste Kammer 10 gelangen kann.

Insofern das Flüssigkeitsniveau in der zweiten Kammer 20 wieder sinkt, löst sich Schwerkraft-bedingt der Schwimmkörper 41 vom Dichtelement 42 und verschiebt sich in die entgegengesetzte Richtung. Um eine Schließung der Öffnung 23 an der unteren Seite der zweiten Kammer durch den Schwimmkörper 41 zu verhindern, umfasst das Rückschlagventil 40 weiterhin eine Wegbegrenzung 43, die eine Bewegung 44 des Schwimmkörpers 41 in Richtung auf die Öffnung 23 über ein bestimmtes Maß hinaus blockiert.

Mit dem hier vorgeschlagenen Entlüftungsventil ist gewährleistet, dass in einem Gehäuse vorhandene Gase, gegebenenfalls vermischt mit Abrieb-Partikeln, effizient aus dem Gehäuse abgeführt werden können und trotzdem der Eintritt von Flüssigkeiten durch das Entlüftungsventil verhindert werden kann.

### Bezugszeichenliste

- 1: Entlüftungsventil
- 10: erste Kammer
- 11: erster Strömungspfad
- 12: erste Strömungsrichtung
- 13: seitliche Öffnung
- 14: Anordnungsseite
- 20: zweite Kammer
- 21: zweiter Strömungspfad
- 22: zweite Strömungsrichtung
- 23: Öffnung
- 30: schräge Begrenzungswand
- 31: Winkel
- 32: Auskragung
- 33: Trennwand
- 40: Rückschlagventil
- 41: Schwimmkörper
- 42: Dichtelement
- 43: Wegbegrenzung
- 44: Bewegung des Schwimmkörpers
- 50: Spritzwasserschutz
- 60: gemeinsamer Strömungspfad
- 70: Formelement
- 71: Gegen-Element
- 72: Rasteinrichtung
- 80: Gehäuse
- 81: Gehäuseöffnung

## Patentansprüche

1. Entlüftungsventil (1) für die Entlüftung eines Antriebsaggregats eines Kraftfahrzeugs, insbesondere eines Hybridmoduls, umfassend eine erste Kammer (10) zur Ausbildung eines ersten Strömungspfads (11) entlang einer ersten Strömungsrichtung (12), wobei die erste Kammer (10) eine Anordnungsseite (14) zur mechanischen Fixierung an einem Gehäuse (80) des Antriebsaggregats aufweist und auf der der Anordnungsseite (14) gegenüberliegenden Seite eine schräge Begrenzungswand (30) aufweist, deren Ebene spitzwinklig zur ersten Strömungsrichtung (12) verläuft und seitlich über die erste Kammer (20) hinauskragt, so dass bei senkrechter Ausrichtung des Entlüftungsventils (1) durch die erste Kammer (10) aufsteigendes Gas von der schrägen Begrenzungswand (30) umlenkbar ist und an der schrägen Begrenzungswand (30) anhaftendes Kondensat an der schrägen Begrenzungswand ablaufen (30) kann und neben der ersten Kammer (10) abtropfen kann, wobei
neben der ersten Kammer (10) eine zweite Kammer (20) angeordnet ist, die von der schrägen Begrenzungswand (30) einseitig abgeschlossen ist und an der der schrägen Begrenzungswand (30) gegenüberliegenden Seite eine Öffnung (23) aufweist,
die zweite Kammer (20) die Öffnung (23) zumindest teilweise umgebend einen Spritzwasserschutz (50) aufweist, mit dem ein Strömungswiderstand für einströmende Flüssigkeit erhöht ist oder eine Barriere gegen Spritzflüssigkeit gebildet ist,
**dadurch gekennzeichnet, dass** vom Rand der Öffnung der zweiten Kammer (20) ausgehend der Spritzwasserschutz (50) in Bezug auf eine Längsachse der zweiten Kammer (20) radial nach innen verläuft, sodass dadurch der Querschnitt der Öffnung der zweiten Kammer (20) eingeschränkt wird.

2. Entlüftungsventil nach einem der vorhergehenden Ansprüche, **dadurch gekennzeichnet, dass** in der zweiten Kammer (20) ein Rückschlagventil (40) angeordnet ist zwecks Blockade eines von der zweiten Kammer (20) ausgebildeten zweiten Strömungspfades (21) bei Eintritt einer Flüssigkeit in die zweite Kammer (20) in Richtung auf die erste Kammer (10).

3. Entlüftungsventil nach Anspruch 2, **dadurch gekennzeichnet, dass** das Rückschlagventil (40) einen Schwimmkörper (41) sowie ein Dichtelement (42) aufweist, die derart angeordnet sind, dass bei in die zweite Kammer (20) eintretender Flüssigkeit der Schwimmkörper (41) auftriebsbedingt gegen das Dichtelement (42) im Wesentlichen Flüssigkeits-dichtend angelegt oder angedrückt wird.

4. Entlüftungsventil nach Anspruch 3, **dadurch gekennzeichnet, dass** das Rückschlagventil (40) weiterhin eine Wegbegrenzung (43) aufweist, die die Positionierung des Schwimmkörpers (41) in einem Abstand zur Öffnung (23) der zweiten Kammer (20) gewährleistet.

5. Entlüftungsventil nach einem der Ansprüche 1-4, **dadurch gekennzeichnet, dass** die erste Kammer (10) und die zweite Kammer (20) derart relativ zueinander angeordnet sind, dass ein durch die beiden Kammern (10,20) ausgebildeter, gemeinsamer Strömungspfad (60) in seiner Erstreckung im Wesentlichen um 180° umgelenkt ist.

6. Entlüftungsventil nach einem der vorhergehenden Ansprüche, **dadurch gekennzeichnet, dass** an der ersten Kammer (10) an der der schrägen Begrenzungswand (30) gegenüberliegenden Seite wenigstens ein Formelement (70) ausgebildet ist, das dazu geeignet ist, mit einem hinsichtlich der Form und Größe komplementär ausgebildeten Gegen-Element (71) eine Rasteinrichtung (72) auszubilden.

7. Entlüftungsventil nach einem der vorhergehenden Ansprüche, **dadurch gekennzeichnet, dass** der Winkel der schrägen Begrenzungswand (30) in Bezug zur Ausrichtung des ersten Strömungspfades (11) der ersten Kammer (10) zwischen 20° und 85° beträgt.

8. Hybridmodul für ein Kraftfahrzeug zum Ankoppeln einer Verbrennungskraftmaschine, umfassend eine elektrische Antriebseinheit sowie wenigstens eine Kupplungseinrichtung, die mit einem Rotor der elektrischen Antriebseinheit drehfest verbunden ist und mit der das Hybridmodul an einer ersten Seite, insbesondere einer Eingangsseite, mit einer Verbrennungskraftmaschine koppelbar ist, und an einer zweiten Seite, insbesondere einer Ausgangsseite, mit einem Getriebe koppelbar ist, wobei das Hybridmodul weiterhin ein Entlüftungsventil (1) gemäß einem der Ansprüche 1-7 aufweist, welches strömungstechnisch mit einer Gehäuseöffnung (81) des Hybridmoduls verbunden ist, sodass Gas aus dem Hybridmodul über das Entlüftungsventil (1) entweichen kann.

## Claims

1. A venting valve (1) for venting a drive assembly of a motor vehicle, in particular of a hybrid module, comprising a first chamber (10) for forming a first flow path (11) along a first flow direction (12), wherein the first chamber (10) has an arrangement side (14) for mechanically fixing on a housing (80) of the drive assembly and, on the side opposite the arrangement side (14), has an oblique boundary wall (30), the plane of which runs at an acute angle with respect to the first flow direction (12) and projects laterally beyond the first chamber (20) so that, when the venting valve (1) is oriented perpendicularly, gas rising through the first chamber (10) can be deflected from the oblique boundary wall (30) and condensate adhering to the oblique boundary wall (30) can run off the oblique boundary wall (30) and can drip down next to the first chamber (10), wherein a second chamber (20) is arranged next to the first chamber (10) which is closed on one side by the oblique boundary wall (30) and has an opening (23) on the side opposite the oblique boundary wall (30),
the second chamber (20) which at least partially surrounds the opening (23) has a spray protection (50) with which a flow resistance for inflowing liquid is increased or a barrier against spray liquid is formed,
**characterised in that**
starting from the edge of the opening of the second chamber (20), the spray protection (50) extends radially inwards relative to a longitudinal axis of the second chamber (20), so that the cross-section of the opening of the second chamber (20) is thereby restricted.

2. The venting valve according to one of the preceding claims, **characterised in that** a non-return valve (40) is arranged in the second chamber (20) for the purpose of blocking a second flow path (21) formed by the second chamber (20) when a liquid enters the second chamber (20) in the direction of the first chamber (10).

3. The venting valve according to claim 2, **characterised in that** the non-return valve (40) has a float (41) and a sealing element (42) which are arranged such that when the liquid enters the second chamber (20), due to buoyancy, the float (41) is moved or pressed against the sealing element (42) in a substantially liquid-tight manner.

4. The venting valve according to claim 3, **characterised in that** the non-return valve (40) further has a stop (43) which ensures the positioning of the float (41) at a distance from the opening (23) of the second chamber (20).

5. The venting valve according to one of claims 1 to 4, **characterised in that** the first chamber (10) and the second chamber (20) are arranged relative to one another in such a way that a common flow path (60) formed by the two chambers (10, 20) is substantially deflected over its extension by 180°.

6. The venting valve according to one of the preceding claims, **characterised in that** at least one shaped element (70) is formed on the first chamber (10) on the side opposite the oblique boundary wall (30) which is suitable for forming a latching device (72) with a counter-element (71) which is designed to be complementary in terms of shape and size.

7. The venting valve according to one of the preceding claims, **characterised in that** the angle of the oblique boundary wall (30) relative to the orientation of the first flow path (11) of the first chamber (10) is between 20° and 85°.

8. A hybrid module for a motor vehicle for coupling an internal combustion engine, comprising an electric drive unit and at least one coupling device which is connected in a rotationally fixed manner to a rotor of the electric drive unit and with which the hybrid module can be coupled, on a first side, in particular an input side, to an internal combustion engine, and on a second side, in particular an output side, to a transmission, wherein the hybrid module also has a venting valve (1) according to one of claims 1 to 7, which is fluid-mechanically connected to a housing opening (81) of the hybrid module, so that gas from the hybrid module can escape via the venting valve (1).

## Revendications

1. Soupape de purge d'air (1) destinée à purger une unité d'entraînement d'un véhicule automobile, en particulier un module hybride, comprenant une première chambre (10) pour former un premier chemin d'écoulement (11) le long d'une première direction d'écoulement (12), la première chambre (10) présentant un côté montage (14) pour une fixation mécanique sur un boîtier (80) de l'unité d'entraînement et, du côté opposé au côté montage (14), une paroi de délimitation oblique (30) dont le plan s'étend à angle aigu par rapport à la première direction d'écoulement (12) et fait saillie latéralement de la première chambre (20), de telle sorte que, lorsque la soupape de purge d'air (1) est orientée verticalement, le gaz montant à travers la première chambre (10) puisse être dévié par la paroi de délimitation oblique (30) et un condensat adhérant à la paroi de délimitation oblique (30) puisse s'écouler sur la paroi de délimitation oblique (30) et dégouliner à côté de la première chambre (10), une seconde chambre (20) disposée à côté de la première chambre (10) étant fermée d'un côté par la paroi de délimitation oblique (30) et présentant une ouverture (23) sur le côté opposé à la paroi de délimitation oblique (30),
la seconde chambre (20) présentant une protection contre les éclaboussures (50) qui entoure au moins partiellement l'ouverture (23) et avec laquelle une résistance à l'écoulement pour le liquide entrant est augmentée ou une barrière contre les éclaboussures de liquide est formée,
**caractérisée en ce que**
en partant du bord de l'ouverture de la seconde chambre (20), la protection contre les éclaboussures (50) s'étend radialement vers l'intérieur par rapport à un axe longitudinal de la seconde chambre (20), de telle sorte que la section transversale de l'ouverture de la seconde chambre (20) soit ainsi restreinte.

2. Soupape de purge d'air selon l'une quelconque des revendications précédentes, **caractérisée en ce qu'**un clapet anti-retour (40) est disposé dans la seconde chambre (20) afin de bloquer un second chemin d'écoulement (21) formé par la seconde chambre (20) lorsqu'un liquide pénètre dans la seconde chambre (20) en direction de la première chambre (10).

3. Soupape de purge d'air selon la revendication 2, **caractérisée en ce que** le clapet anti-retour (40) comporte un flotteur (41) et un élément d'étanchéité (42) qui sont disposés de telle sorte que lorsque le liquide pénètre dans la seconde chambre (20), le flotteur (41) soit appliqué ou pressé contre l'élément d'étanchéité (42) de manière sensiblement étanche au liquide à cause de la poussée.

4. Soupape de purge d'air selon la revendication 3, **caractérisée en ce que** le clapet anti-retour (40) comporte en outre un limiteur de course (43) qui assure le positionnement du flotteur (41) à distance de l'ouverture (23) de la seconde chambre (20).

5. Soupape de purge d'air selon l'une quelconque des revendications 1 à 4, **caractérisée en ce que** la première chambre (10) et la seconde chambre (20) sont disposées l'une par rapport à l'autre de telle sorte qu'un chemin d'écoulement commun (60) formé par les deux chambres (10, 20) soit dévié dans son étendue sensiblement sur un angle de 180°.

6. Soupape de purge d'air selon l'une quelconque des revendications précédentes, **caractérisée en ce qu'**au moins un élément profilé (70) est formé sur la première chambre (10) du côté opposé à la paroi de délimitation oblique (30), qui est conçu pour former un dispositif d'encliquetage (72) avec un contre-élément (71) conçu de manière complémentaire en termes de forme et de taille.

7. Soupape de purge d'air selon l'une quelconque des revendications précédentes, **caractérisée en ce que** l'angle de la paroi de délimitation oblique (30) par rapport à l'orientation du premier chemin d'écoulement (11) de la première chambre (10) est compris entre 20° et 85°.

8. Module hybride pour un véhicule automobile pour l'accouplement d'un moteur à combustion interne, comprenant une unité d'entraînement électrique et au moins un dispositif d'accouplement qui est relié solidaire en rotation à un rotor de l'unité d'entraînement électrique et avec lequel le module hybride peut être accouplé à un moteur à combustion d'un premier côté, en particulier d'un côté entrée et, d'un second côté, en particulier d'un côté sortie, à une transmission, le module hybride comportant également une soupape de purge d'air (1) selon l'une quelconque des revendications 1 à 7 qui est reliée fluidiquement à une ouverture de boîtier (81) du module hybride, de telle sorte que le gaz du module hybride puisse s'échapper par la soupape de purge d'air (1).
